# EUROPEAN PATENT APPLICATION

(11) **EP 4 380 019 A1**
(43) Date of publication of application: **05.06.2024**
(21) Application number: 22880673.3
(22) Date of filing: 06.09.2022
(51) Int. Cl.: H02K 15/085, H02K 3/34

(54) **STATOR MANUFACTURING METHOD**

(30) Priority: 14.10.2021 JP 2021168869
(71) Applicant: AISIN CORPORATION, Kariya-shi, Aichi 448-8650 (JP)
(72) Inventor: NAKAYAMA, Suguru, Kariya-shi, Aichi 448-8650 (JP); HOSHINO, Akinori, Kariya-shi, Aichi 448-8650 (JP); KANIE, Takahisa, Kariya-shi, Aichi 448-8650 (JP)
(74) Representative: Kramer Barske Schmidtchen Patentanwälte PartG mbB
(86) International application number: PCT/JP2022/033439
(87) International publication number: WO 2023/062977

(57) **Abstract**

The method for manufacturing a stator includes: a module forming step of forming a coil module in which a plurality of slot accommodated parts are integrally molded with an insulating resin member by filling a space between the plurality of slot accommodated parts and covering a periphery of the plurality of slot accommodated parts with the resin member in a state where the plurality of slot accommodated parts that are to be disposed in a slot of a stator core are arranged such that the plurality of slot accommodated parts are allowed to be disposed in the slots.

## Description

### TECHNICAL FIELD

The present invention relates to a method for manufacturing a stator.

### BACKGROUND ART

Conventionally, a method for manufacturing a stator in which slot accommodated parts are disposed in slots of a stator core is known. Such a method for manufacturing a stator is disclosed in, for example, JP 3196738 B2.

JP 3196738 B2 discloses a method for manufacturing a stator in which U-shaped segment coils are disposed in slots of a stator core, and end portions of the segment coils are joined so as to form a coil part. Note that, in the method for manufacturing a stator described in JP 3196738 B2, the coil part is disposed such that the coil end portions disposed outside the slots of the coil part are adjacent to the coil end portions of the different phase and the slot accommodated parts disposed inside the slots of the coil part are adjacent to the slot accommodated parts of the same phase.

### CITATIONS LIST

### PATENT LITERATURE

Patent Literature 1: JP 3196738 B2

### SUMMARY OF INVENTION

### TECHNICAL PROBLEMS

Here, although not described in Japanese JP 3196738 B2, it is considered that a conductive wire on which an insulating coating film having a uniform thickness as a whole is formed is used as the segment coils in the method for manufacturing a stator as described in JP 3196738 B2. However, in the method for manufacturing a stator described in JP 3196738 B2, since the coil end portions are disposed to be adjacent to the coil end portions of different phases, a coating film is required to have a relatively large thickness capable of securing a relatively large insulation property. On the other hand, since the slot accommodated parts are disposed to be adjacent to the slot accommodated parts of the same phases, the slot accommodated parts do not need to have such a thick coating film as the coating film for the coil end portions. That is, on the slot accommodated parts, an excessively thick coating film for securing insulation is formed. In this case, in each slot, as the coating film of the slot accommodated parts becomes thicker, a space factor of the slot accommodated parts in the slot becomes smaller by the amount corresponding to the increase in the thickness of the coating film of the slot accommodated parts. For this reason, a method for manufacturing a stator capable of preventing a space factor of a slot accommodated parts in a slot from decreasing is desired.

The present invention has been made to solve the above problems, and the present invention provides a method for manufacturing a stator capable of preventing a space factor of a slot accommodated parts in a slot from becoming smaller.

### SOLUTIONS TO PROBLEMS

In order to achieve the above method, a method for manufacturing a stator in an aspect of the present invention includes: a module forming step of forming a coil module in which a plurality of slot accommodated parts are integrally molded with an insulating resin member by filling a space between the plurality of slot accommodated parts with the resin member and covering a periphery of the plurality of slot accommodated parts with the resin member in a state where the plurality of slot accommodated parts on which coating films are not formed and that are to be disposed in a slot of a stator core are arranged such that the plurality of slot accommodated parts are allowed to be disposed in the slot; and a module inserting step of inserting the coil module into the slot after the module forming step.

A method for manufacturing a stator in an aspect of the present invention includes, as described above,
a module forming step of forming a coil module in which a plurality of slot accommodated parts are integrally molded with an insulating resin member by filling a space between the plurality of slot accommodated parts with the resin member and covering a periphery of the plurality of slot accommodated parts with the resin member in a state where the plurality of slot accommodated parts that are to be disposed in a slot of a stator core are arranged such that the plurality of slot accommodated parts are allowed to be disposed in the slot. As a result, in the module forming step, it is possible to form a resin member having desired thicknesses between the plurality of slot accommodated parts and around the plurality of slot accommodated parts. That is, it is possible to form (i) a resin member having an appropriate thickness (thickness that is not excessive) for ensuring insulation between the plurality of slot accommodated parts and (ii) a resin member having an appropriate thickness (thickness that is not excessive) for ensuring insulation between the slot accommodated parts and the stator core, respectively, (i) between the plurality of slot accommodated parts and (ii) around the plurality of slot accommodated parts. As a result, it is possible to prevent the space factor of the slot accommodated parts in the slot from becoming smaller. In addition, unlike the case where the thickness of the coating film between the plurality of slot accommodated parts is equal to the thickness of the coating film between the plurality of slot accommodated parts and their periphery as in the case where a conductive wire on which an insulating coating film having a uniform thickness as a whole is formed is used as the segment coils, it is possible to omit a step of separately providing an insulating member (for example, insulating paper) for ensuring the insulating property between the slot accommodated parts and the stator core. In addition, after the coil module in which the plurality of slot accommodated parts are integrally molded by the resin member is formed in the module forming step, the coil module is inserted into the slot in the module inserting step. Therefore, it is not necessary to separately provide a jig for fixing the plurality of slot accommodated parts in a state where the plurality of slot accommodated parts are each arranged in the slot.

### ADVANTAGEOUS EFFECTS OF INVENTION

With the present invention, it is possible to provide a method for manufacturing a stator capable of preventing a space factor of slot accommodated parts in a slot from decreasing.

### BRIEF DESCRIPTION OF DRAWINGS

FIG. 1 is a perspective view illustrating an entire stator according to an embodiment of the present invention.
FIG. 2 is a perspective view (sectional view) for illustrating a configuration of a stator according to an embodiment of the present invention.
FIG. 3 is a plan view for illustrating a configuration of a stator according to an embodiment of the present invention.
FIG. 4 is a view of the inside of a slot of a stator according to an embodiment of the present invention as viewed from a radially inner side.
FIG. 5 is a perspective view illustrating a coil module of a stator according to an embodiment of the present invention.
FIG. 6 is a diagram illustrating a manufacturing flow of a stator according to an embodiment of the present invention.
FIG. 7 is a first diagram for illustrating a module inserting step in a manufacturing flow of a stator according to an embodiment of the present invention.
FIG. 8 is a second diagram for illustrating a module inserting step in a manufacturing flow of a stator according to an embodiment of the present invention.
FIG. 9 is a third diagram for illustrating a module inserting step in a manufacturing flow of a stator according to an embodiment of the present invention.

### DESCRIPTION OF EMBODIMENTS

In the following, an embodiment of the present invention will be described with reference to the drawings.

### [Configuration of stator]

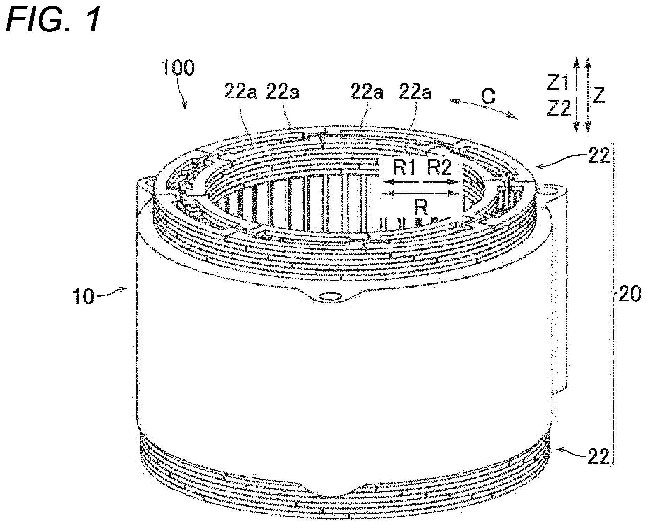

With reference to FIGS. 1 to 5, a configuration of a stator 100 according to an embodiment of the present invention will be described.

In the following description, the axial direction, the radial direction, and the circumferential direction of the stator 100 are, respectively, referred to as a Z direction, an R direction, and a C direction. Furthermore, one side and the other side in the Z direction are, respectively, referred to as a Z1 side and a Z2 side. Furthermore, one side (radially inner side) and the other side (radially outer side) in the R direction are, respectively, referred to as an R1 side and an R2 side.

### (Overall configuration of stator)

As illustrated in FIG. 1, the stator 100 is a stator constituting a part of a rotary electric machine of an inner rotor type (not illustrated). That is, a rotor (not illustrated) is disposed on the R1 side of the stator 100 to face the stator 100. The rotary electric machine is, for example, a motor, a generator, or a motor generator.

The stator 100 includes a stator core 10 and a coil part 20.

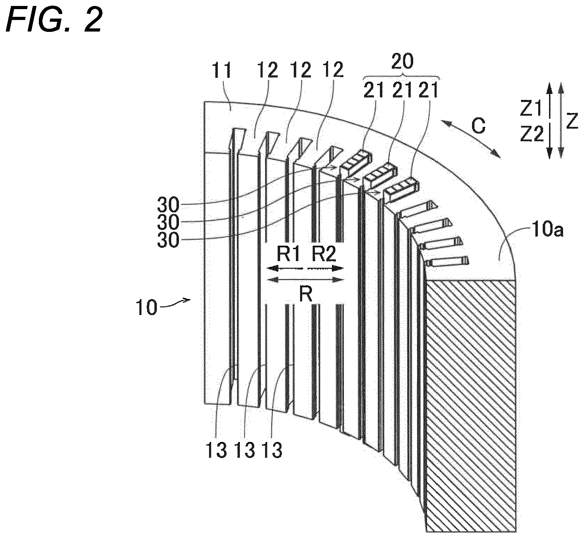

As illustrated in FIG. 2, the stator core 10 includes: a back yoke 11 having an annular shape; and a plurality of teeth 12 protruding from the back yoke 11 toward the R1 side. In addition, a slot 13 is formed in each of the spaces between the teeth 12 adjacent to each other in the C direction. That is, the stator core 10 includes a plurality of slots 13.

Each of the plurality of slots 13 is provided to extend in the axial direction (Z direction). Furthermore, each of the plurality of slots 13 is formed to open on both sides in the Z direction in the stator core 10. Furthermore, each of the plurality of slots 13 is formed to open on the R1 side in the stator core 10.

As illustrated in FIGS. 1 and 2, the coil part 20 is disposed with respect to the stator core 10. The coil part 20 is a conductor containing any of copper, a copper alloy, aluminum, and an aluminum alloy as a main component. The coil part 20 is configured to generate a magnetic flux by being supplied with three-phase alternating current power from a power supply part (not illustrated).

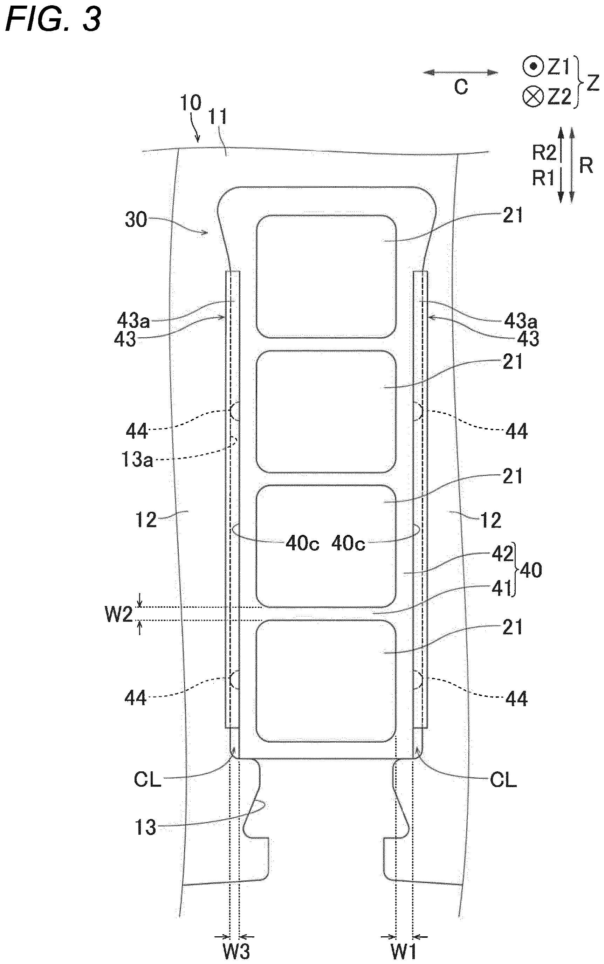

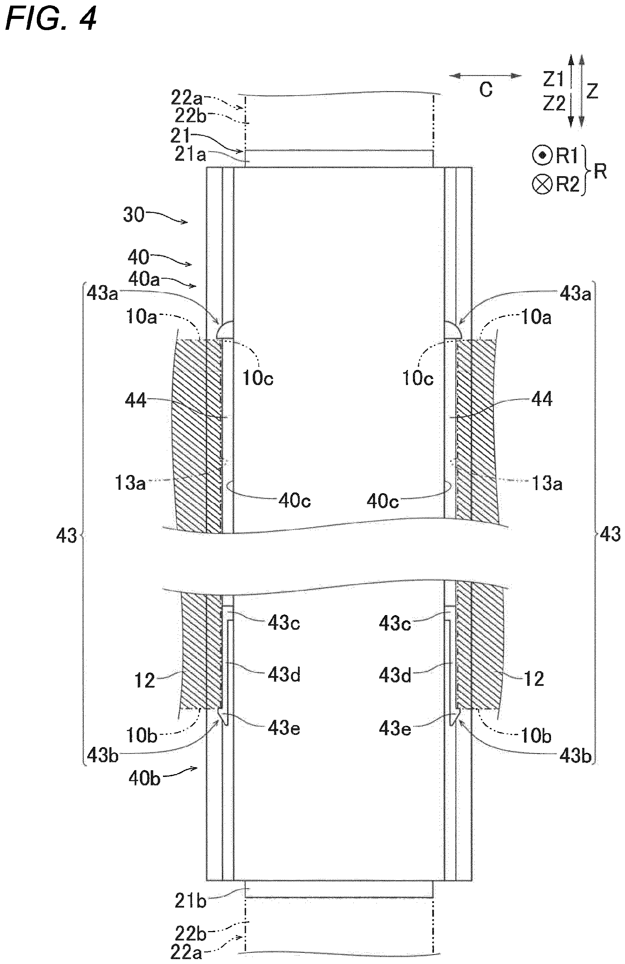

As illustrated in FIG. 2, the coil part 20 includes a plurality of linear slot accommodated parts 21. Each of the plurality of slot accommodated parts 21 is accommodated in one of the slots 13. As illustrated in FIG. 3, in each of the plurality of slots 13, four slot accommodated parts 21 are accommodated to be arranged in the R direction. Note that the number of the slot accommodated parts 21 accommodated in each of the plurality of slots 13 may be a number other than four. As illustrated in FIG. 4, an end portion 21a of each slot accommodated part 21 on the Z1 side protrudes toward the Z1 side of the stator core 10 from an end face 10a on the Z1 side, as viewed in the R direction. Furthermore, an end portion 21b of each slot accommodated part 21 on the Z2 side protrudes toward the Z2 side of the stator core 10 from an end face 10b on the Z2 side, as viewed in the R direction.

As illustrated in FIG. 1, the coil part 20 includes coil end portions 22. The coil end portions 22 are disposed on respective ones of the Z1 side and the Z2 side of the stator core 10. That is, the coil end portions 22 are disposed outside the slot 13. The coil end portions 22 each include a plurality of bus bar members 22a having a plate shape. As illustrated in FIG. 4, the end portion 22b of the bus bar member 22a disposed on the Z1 side of the stator core 10 is joined to the end portion 21a of the slot accommodated part 21 on the Z1 side. Furthermore, the end portion 22b of the bus bar member 22a disposed on the Z2 side of the stator core 10 is joined to the end portion 21b of the slot accommodated part 21 on the Z2 side.

Note that, although not illustrated, (i) the joined portions between (a) the end portions 21a and 21b of the slot accommodated parts 21 in the Z direction and (b) the end portions 22b of the bus bar members 22a and (ii) the spaces between the plurality of bus bar members 22a are subjected to an insulation process by immersion in resin, resin molding, or the like, after the end portions 21a and 21b of the slot accommodated parts 21 in the Z direction and the end portion 22b of the bus bar member 22a are joined.

### (Configuration of coil module)

As illustrated in FIG. 3, the stator 100 includes a coil module 30. The coil module 30 includes: a plurality of slot accommodated parts 21 arranged, as a part of the coil part 20, to be aligned in the radial direction (R direction) in each slot 13; and an insulating resin member 40 integrally formed with the plurality of slot accommodated parts 21 to fill the space between the plurality of slot accommodated parts 21 and to cover the periphery of the plurality of slot accommodated parts 21.

As a result, since, in the coil module 30, the insulating resin member 40 is formed integrally with the plurality of slot accommodated parts 21 to fill the space between the plurality of slot accommodated parts 21 and cover the periphery of the plurality of slot accommodated parts 21, the resin member 40 having desired thicknesses can be formed between the plurality of slot accommodated parts 21 and the periphery of the plurality of slot accommodated parts 21. That is, it is possible to form (i) the resin member 40 having an appropriate thickness (thickness that is not excessive) for ensuring insulation between the plurality of slot accommodated parts 21 and (ii) the resin member 40 having an appropriate thickness (thickness that is not excessive) for ensuring insulation between the slot accommodated parts 21 and the stator core 10, respectively, (i) between the plurality of slot accommodated parts 21 and (ii) around the plurality of slot accommodated parts 21. As a result, it is possible to prevent the space factor of the slot accommodated parts 21 in the slot 13 from becoming smaller. In addition, unlike the case where the thickness of the coating film between the plurality of slot accommodated parts 21 is equal to the thickness of the coating film between the plurality of slot accommodated parts 21 and their periphery as in the case where a conductive wire on which an insulating coating film having a uniform thickness as a whole is formed is used as a segment coil, it is possible to omit a step of separately providing an insulating member (for example, insulating paper) for ensuring the insulating property between the slot accommodated parts 21 and the stator core 10.

The resin member 40 is made of a thermoplastic resin material such as poly ether ether ketone (PEEK) or polyphenylenesulfide (PPS). The resin member 40 is formed such that a thickness W1 of the resin member 40 around the plurality of slot accommodated parts 21 is larger than a thickness W2 of the resin member 40 between the plurality of slot accommodated parts 21.

As illustrated in FIG. 4, the resin member 40 includes positioning parts 43 for disposing the coil module 30 at a predetermined position in the axial direction (Z direction) with respect to the slot 13 when the coil module 30 is inserted into the slot 13. The positioning parts 43 each include a first positioning projection 43a formed at the end portion 40a of the resin member 40 on the Z1 side and a second positioning projection 43b formed at the end portion 40b of the resin member 40 on the Z2 side.

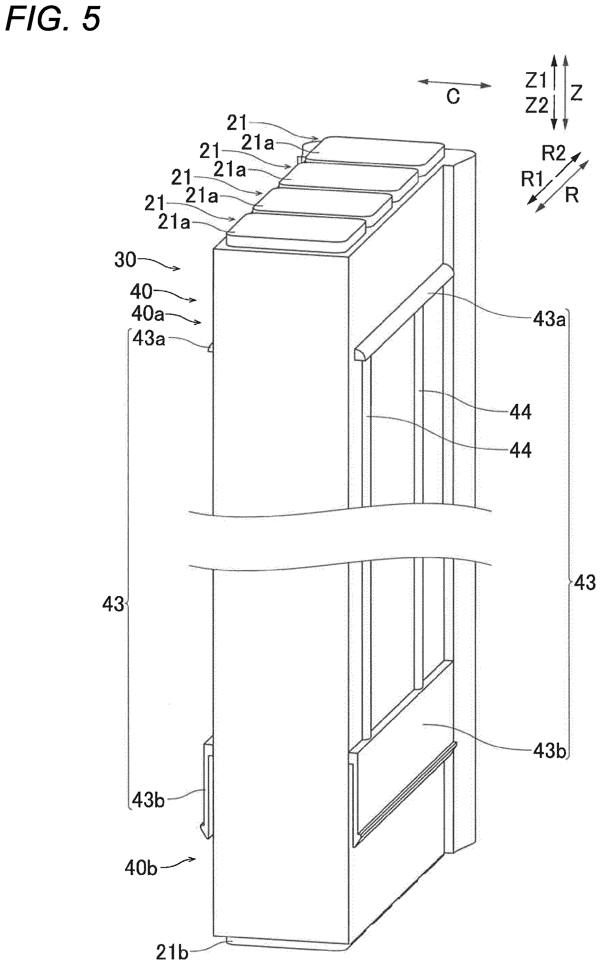

The first positioning projections 43a are formed on both side surfaces of the resin member 40 in the C direction such that the first positioning protrusions 43a protrude toward the slot 13 side. As illustrated in FIG. 5, the first positioning projections 43a are formed to extend in the R direction. As illustrated in FIG. 4, the end portions of the first positioning projections 43a on the Z2 side are in contact with end face 10a of the stator core 10 on the Z1 side.

The second positioning projections 43b are formed on both side surfaces 40c of the resin member 40 in the C direction. As illustrated in FIG. 5, the second positioning projections 43b are formed in a plate shape to extend in the R direction. As illustrated in FIG. 4, the second positioning projections 43b each include: a first portion 43c protruding, at the end portion of the second positioning projection 43b on the Z1 side, from a side surface 40c of the resin member 40 in the C direction toward the slot 13; a second portion 43d extending from a tip end portion of the first portion 43c toward the Z2 side; and a third portion 43e protruding, at the end portion on of the second portion 43d on the Z2 side, toward the slot 13. The first portion 43c has a projection height less than a width W3 of a gap CL to be described later. The second portion 43d has a size of several times to several tens times the projection height (size in the C direction) of the first portion 43c, and extends from the tip end portion of the first portion 43c toward the Z2 side. With this configuration, the second positioning projection 43b is configured such that the second portion 43d can be elastically deformed by the third portion 43e being pressed from the slot 13 side and can bent toward the resin member 40 side. Furthermore, the surface of the third portion 43e on the Z1 side is in contact with the end face 10b of the stator core 10 on the Z2 side. That is, the stator core 10 is positioned at a predetermined position in the Z direction by being sandwiched between the first positioning projection 43a and the second positioning projection 43b in the Z direction. Furthermore, the third portion 43e has an inclined surface extending from the slot 13 side toward the side opposite to the slot 13 side (toward the resin member 40) in the direction from the Z1 side toward the Z2 side.

As illustrated in FIG. 3, gaps CL are formed between the resin member 40 and both side surfaces 13a of the slot 13 in the C direction. A width W3 of the gaps CL is formed to be smaller than the thickness W1 of the resin member 40 around the plurality of slot accommodated parts 21.

As illustrated in FIG. 5, the resin member 40 includes insertion-time contact projections 44 for bringing the coil module 30 into contact with the slot 13 when the coil module 30 is inserted into the slot 13. The insertion-time contact projections 44 are formed to protrude from both side surfaces 40c of the resin member 40 in the C direction. The insertion-time contact projections 44 are formed to extend in the Z direction. The insertion-time contact projections 44 have a semicircular shape as viewed in the Z direction. A plurality of (two) insertion-time contact projections 44 are formed on each of both side surfaces in the C direction. As illustrated in FIG. 3, the insertion-time contact projections 44 are in contact with, in the gap CL, the side surfaces 13a of the slot 13 in the C direction. That is, the insertion-time contact projections 44 have a projection height substantially equal to the width W3 of the gaps CL in the C direction.

### [Method for manufacturing stator]

With reference to FIGS. 4 to 9, a method for manufacturing the stator 100 according to the embodiment of the present invention will be described.

### (Straightening and cutting step)

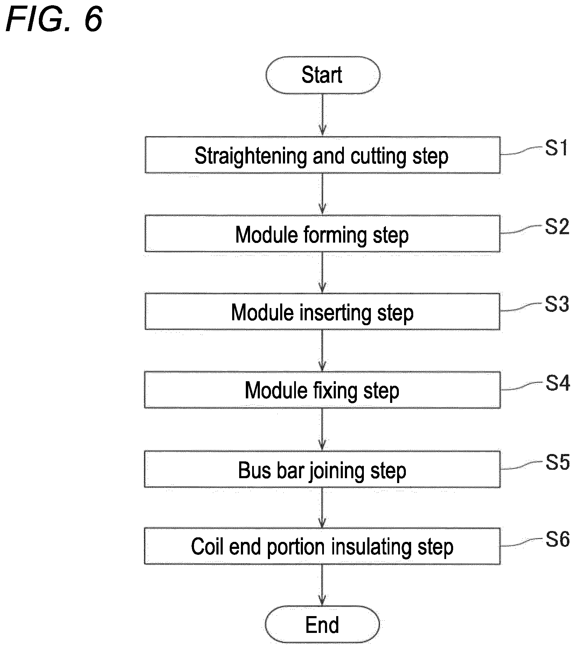

First, as illustrated in FIG. 6, in step S1, a straightening and cutting step is performed. The straightening and cutting step (S1) is a step of forming a plurality of linear slot accommodated parts 21. Specifically, a coil wire material on which coating film (insulating coating film) is not formed is corrected to be straight. Then, the coil wire material corrected to be straight is cut to the length of the slot accommodated parts 21 to be disposed in the slot 13 of the stator core 10.

### (Module forming step)

Next, as illustrated in FIG. 6, in step S2, a module forming step is performed. As illustrated in FIG. 5, the module forming step (S2) is a step of forming the coil module 30 in which the plurality of slot accommodated parts 21 are integrally molded with the insulating resin member 40 by filling the space between the plurality of slot accommodated parts 21 and covering the periphery of the plurality of slot accommodated parts 21 with the resin member 40 in a state where the plurality of slot accommodated parts 21 that coating films (insulating coating films) are not formed on and that are to be disposed, as a part of the coil part 20, in a slot 13 of the stator core 10 are arranged such that the plurality of slot accommodated parts 21 are allowed to be disposed in the slot 13. Note that, in the module forming step (S2), the coil module 30 in which the plurality of slot accommodated parts 21 are integrally molded by the resin member 40 is formed by insert molding.

As a result, in the module forming step (S2), it is possible to form the resin member 40 having desired thicknesses between the plurality of slot accommodated parts 21 and around the plurality of slot accommodated parts 21. That is, it is possible to form (i) the resin member 40 having an appropriate thickness (thickness that is not excessive) for ensuring insulation between the plurality of slot accommodated parts 21 and (ii) the resin member 40 having an appropriate thickness (thickness that is not excessive) for ensuring insulation between the slot accommodated parts 21 and the stator core 10, respectively, (i) between the plurality of slot accommodated parts 21 and (ii) around the plurality of slot accommodated parts 21. As a result, it is possible to prevent the space factor of the slot accommodated parts 21 in the slot 13 from becoming smaller. In addition, unlike the case where the thickness of the coating film between the plurality of slot accommodated parts 21 is equal to the thickness of the coating film between the plurality of slot accommodated parts 21 and their periphery as in the case where a conductive wire on which an insulating coating film having a uniform thickness as a whole is formed is used as a segment coil, it is possible to omit a step of separately providing an insulating member (for example, insulating paper) for ensuring the insulating property between the slot accommodated parts 21 and the stator core 10. In addition, after the coil module 30 in which the plurality of slot accommodated parts 21 are integrally molded by the resin member 40 is formed in the module forming step (S2), the coil module 30 is inserted into the slot 13 in the module inserting step (S3). Therefore, it is not necessary to separately provide a jig for fixing each of the plurality of slot accommodated parts 21 in a state where the plurality of slot accommodated parts 21 are each arranged in the slots 13.

In addition, the module forming step (S2) is a step of forming the coil module 30 such that the end portions 21a and 21b of each of the plurality of linear slot accommodated parts 21 in the longitudinal direction (Z direction) are exposed from the coil module 30. Specifically, the coil module 30 is formed such that the end portions 21a and 21b of each of the plurality of linear slot accommodated parts 21 in the longitudinal direction slightly protrude from the coil module 30 when viewed from the side of the coil module 30. As a result, since the end portions 21a and 21b of each of the plurality of slot accommodated parts 21 in the longitudinal direction (Z direction) are exposed from the coil module 30, the end portions 21a and 21b of each of the plurality of slot accommodated parts 21 in the longitudinal direction can be connected, in the subsequent step (bus bar joining step (S5)), to the coil end portion 22 (bus bar members 22a) disposed outside the slots 13 without removing part of the resin member 40 from the coil module 30 in order to expose the plurality of slot accommodated parts 21 from the resin member 40. As a result, as compared with the case where it is necessary to peel off (remove) the coating films (insulating coating films) at the end portions of the segment coils as in the case of connecting the segment coils on which coating films (insulating coating films) are formed, there is no need for a dedicated jig or device for removing the coating.

Furthermore, the module forming step (S2) is a step of forming the coil module 30 such that the thickness W1 of the resin member 40 around the plurality of slot accommodated parts 21 is larger than the thickness W2 of the resin member 40 between the plurality of slot accommodated parts 21. Note that, as described above, in order to secure insulation between the slot accommodated part 21 and the stator core 10, the resin member 40 needs to have a larger thickness than to secure insulation between the slot accommodated parts 21. As a result, with the insulating resin member 40, it is possible to form (i) the resin member 40 having an appropriate thickness for ensuring insulation between the slot accommodated parts 21 and (ii) the resin member 40 having an appropriate thickness for ensuring insulation between the slot accommodated parts 21 and the stator core 10, respectively, (i) between the plurality of slot accommodated parts 21 disposed in the slot 13 and (ii) around the plurality of slot accommodated parts 21.

In addition, the module forming step (S2) is a step of forming the coil module 30 including the above-described positioning parts 43 that are made of the resin member 40 and position the coil module 30 with respect to the slot 13 in the axial direction (Z direction) of the stator core 10. In detail, the module forming step (S2) is a step of forming the coil module 30 including: the above-described first positioning projections 43a formed, as the positioning parts 43, at the end portion 40a on one side of the coil module 30 in the longitudinal direction (Z direction); and the above-described second positioning projections 43b, elastically deformably formed, as the positioning parts 43, at the end portion 40b on the other side of the coil module 30 in the longitudinal direction.

In addition, the module forming step (S2) is a step of forming the coil module 30 including the above-described insertion-time contact projections 44 that are made of the resin member 40, are formed on the side surfaces 40c of the coil module 30 to extend in the longitudinal direction (Z direction) of the coil module 30, protrude from the side surfaces 40c, and are to be brought into contact with the slots 13 in the module inserting step (S3).

Note that the module forming step (S2) is a step of forming the coil module 30 in which the plurality of slot accommodated parts 21 are integrally molded with the thermoplastic resin member 40 (for example, PEEK or PPS).

### (Module inserting step)

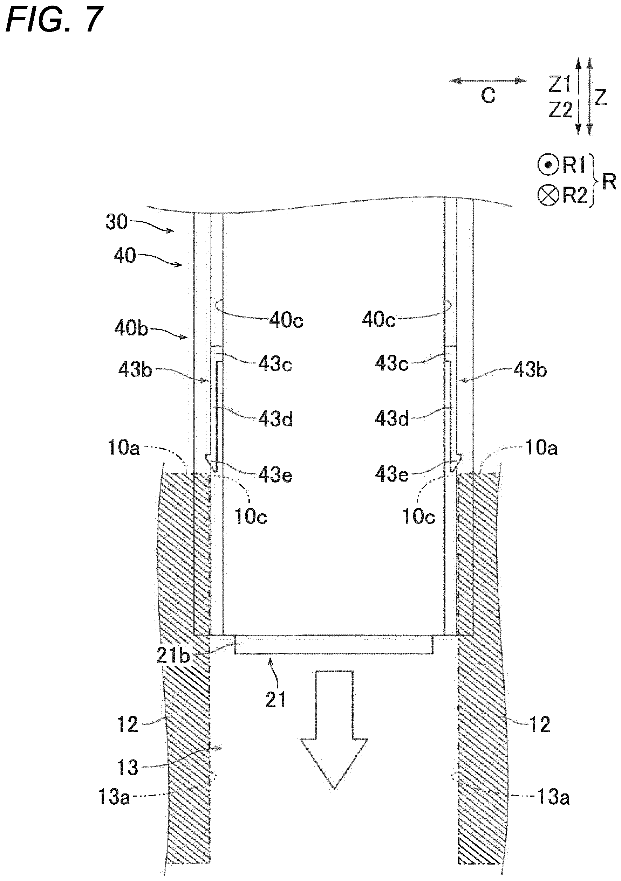

Next, as illustrated in FIG. 6, in step S3, the module inserting step is performed. As illustrated in FIGS. 7 to 9, the module inserting step (S3) is a step of inserting the coil module 30 into the slot 13. Specifically, a plurality of the coil modules 30 are inserted into respective ones of the plurality of slots 13.

In addition, the module inserting step (S3) is a step of inserting the coil modules 30 into the slots 13 such that the end portions 21a and 21b of each of the plurality of slot accommodated parts 21 in the longitudinal direction (Z direction) are disposed outside the slots 13. Specifically, each coil module 30 is formed such that the end portions 21a and 21b of each of the plurality of linear slot accommodated parts 21 in the longitudinal direction slightly protrude from the coil module 30 when viewed in the R direction as described above. Then, the coil module 30 is inserted into the slot 13 such that the coil module 30 slightly protrudes from the stator core 10 when viewed from the R direction. As a result, as compared with the case where the end portions 21a and 21b of each of the plurality of slot accommodated parts 21 in the longitudinal direction (Z direction) are disposed in the slot 13, the end portions 21a and 21b of each of the plurality of slot accommodated parts 21 in the longitudinal direction can be easily connected, in the subsequent step (bus bar joining step (S5)), to parts (bus bar members 22a) disposed outside the slot 13.

In addition, the module inserting step (S3) is a step of inserting the coil module 30 into the slot 13 such that the coil module 30 is disposed, by the positioning parts 43, at a predetermined position in the axial direction (Z direction) with respect to the slot 13. As a result, the coil module 30 can be disposed, by the positioning parts 43, at a predetermined position in the axial direction (Z direction) with respect to the slot 13 when the coil module 30 is inserted into the slot 13, so that it is possible to omit a process of temporarily fixing the coil module 30 in the slot 13 with varnish or the like after the coil module 30 is inserted into the slot 13. As a result, the manufacturing process can be simplified.

In detail, the module inserting step (S3) is a step of inserting the coil module 30 into the slot 13 in the following manner. While the second positioning projections 43b are made in contact with the slot 13 with the other side (Z2 side) in the longitudinal direction (Z direction) of the coil module 30 as the top end and are therefore elastically deformed toward the coil module 30, when the first positioning projections 43a are brought into contact with the end face 10a on one side of the stator core 10 in the axial direction, insertion of the coil modules 30 is stopped, and the second positioning projections 43b reach the outside of the slot 13 and are elastically deformed toward the side opposite to the coil module 30 side, thereby engaging with the end faces 10b of the stator core 10 on the other side in the axial direction. As a result, after the coil module 30 is inserted, the stator core 10 is sandwiched between the first positioning projections 43a and the second positioning projections 43b in the axial direction (Z direction). Therefore, when the coil module 30 is inserted into the slot 13, the coil module 30 can be easily disposed at a predetermined position in the axial direction with respect to the slot 13 by the first positioning projections 43a and the second positioning projections 43b.

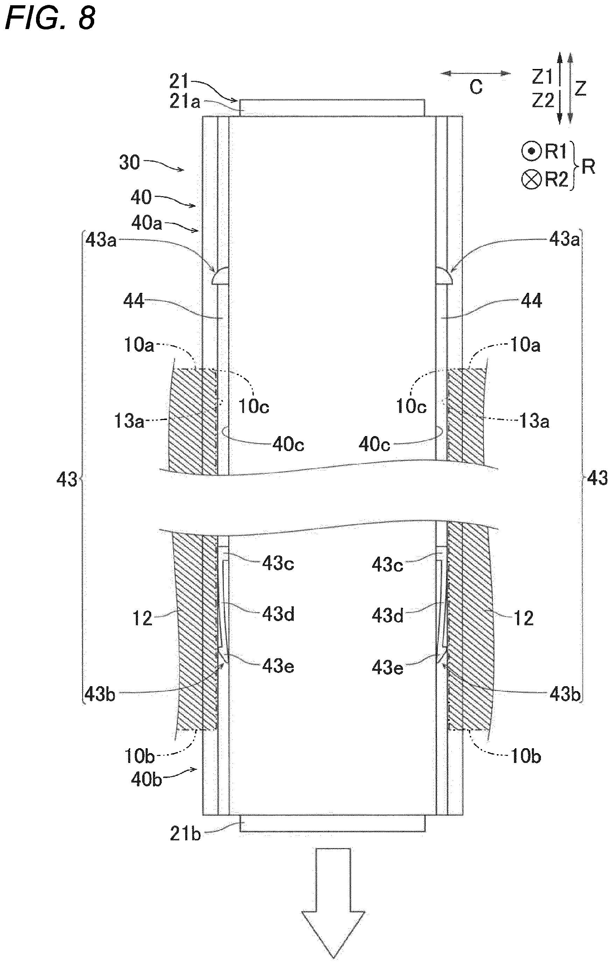

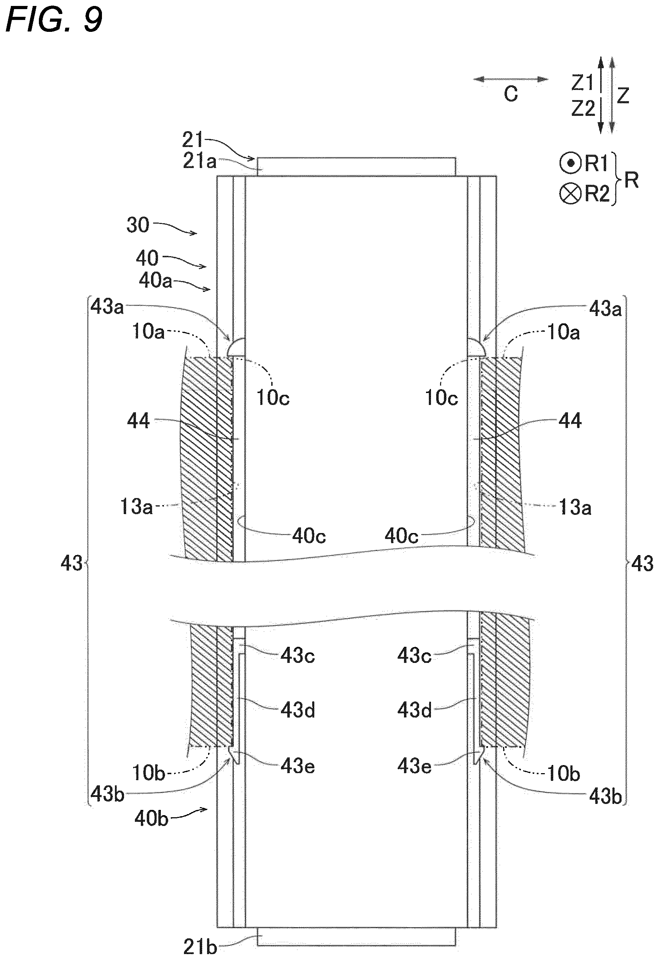

Specifically, as illustrated in FIG. 7, the insertion of the coil module 30 into the slot 13 is started with the Z2 side where the second positioning projections 43b are formed as the top end. Note that in each of end portions, on the Z1 side, of both side surfaces 13a of the slot 13 in the C direction, an inclined surface 10c is formed to face the inclined surface of the third portion 43e of the corresponding second positioning projection 43b. With this configuration, when the coil module 30 is inserted into the slot 13, the third portions 43e of the second positioning projections 43b are guided to the coil module 30 side by the inclined surfaces 10c; therefore, as the third portions 43e move toward the coil module 30 side, the second positioning projections 43b are elastically deformed such that the second portions 43d bent toward the resin member 40 side. Then, as illustrated in FIG. 8, the insertion of the coil module 30 into the slot 13 is advanced in a state where the second positioning projections 43b are elastically deformed toward the resin member 40 side. Then, as illustrated in FIG. 9, when the first positioning projections 43a come into contact with the end face 10a of the stator core 10 on the Z 1, the coil module 30 cannot be inserted into the slot 13 any further. Furthermore, at the same time when the first positioning projections 43a come into contact with the end face 10a of the stator core 10 on the Z 1, the third portions 43 e of the second positioning projections 43b reach the outside of the slot 13, so that the second portions 43d of the second positioning projections 43b elastically deformed to the coil module 30 side return to a normal state where the second portions 43d are not elastically deformed. That is, the third portions 43e of the second positioning projections 43b come into contact with the end faces 10b on the other side in the axial direction of the stator core 10.

Furthermore, as illustrated in FIGS. 7 to 9, the module inserting step (S3) is a step of inserting the coil module 30 into the slot 13 while keeping the insertion-time contact projections 44 in contact with the slots 13.

By this step, it is possible to reduce an area where the coil module 30 is in contact with the slot 13 when the coil module 30 is inserted into the slot 13, as compared with the case where the insertion-time contact projections 44 are not brought into contact with the slot 13 when the coil module 30 is inserted into the slot 13. As a result, the frictional resistance generated in the coil module 30 (resin member 40) when the coil module 30 is inserted into the slot 13 can be reduced, so that the coil module 30 can be efficiently inserted into the slot 13. In addition, unlike the case where the insertion-time contact projections 44 are not brought into contact with the slot 13 when the coil module 30 is inserted into the slot 13, the resin member 40 that is of the resin member 40 and is located around the plurality of slot accommodated parts 21 formed to secure the insulation between the slot accommodated parts 21 and the stator core 10 does not directly contact the inner surface of the slot 13, so that the following situation can be prevented. The resin member 40 around the plurality of slot accommodated parts 21 is scraped when the coil module 30 is inserted into the slot 13; therefore, the insulation between the slot accommodated parts 21 and the stator core 10 cannot be secured as designed. By measuring the frictional resistance generated in the coil module 30 (resin member 40) when the coil module 30 is inserted into the slot 13, it is possible to estimate the change in the protrusion amount, of the insertion-time contact projections 44 at the time of insertion, caused by scraping of the insertion-time contact projection 44 when the coil module 30 is inserted into the slot 13. By inserting the coil module 30 into the slot 13 while measuring the frictional resistance in this manner, it is possible to easily check whether the resin member 40 around the plurality of slot accommodated parts 21 is not scraped, so that the quality of the coil modules 30 (stator 100) can be easily improved.

### (Module fixing step)

Next, as illustrated in FIG. 6, in step S4, a module fixing step is performed. The module fixing step (S4) is a step of fixing the coil module 30 to the stator core 10 by heating and melting, and cooling and solidifying at least part of the resin member 40 in the coil module 30. For example, the coil module 30 is fixed to the stator core 10 by heating and melting, and cooling and solidifying at least one of the vicinities of the first positioning projections 43a and the vicinities of the second positioning projections 43b of the resin member 40. As a result, the coil module 30 can be fixed to the stator core 10 by using the resin member 40 in the coil module 30 without separately providing a fixing member for fixing the coil module 30 to the stator core 10.

### (Bus bar joining step)

Next, as illustrated in FIG. 6, in step S5, a bus bar joining step is performed. As illustrated in FIG. 4, the bus bar joining step (S5) is a step of joining (i) the end portions 21a and 21b, of the slot accommodated parts 21 in the longitudinal direction (Z direction), disposed outside the slot 13 and exposed from the coil module 30 and (ii) the end portions 22b of the plate-shaped bus bar members 22a for connecting, outside the slot 13, the end portions 21a and 21b of the slot accommodated parts 21 disposed in mutually different slots 13. Specifically, the end portion 21a of the slot accommodated part 21 on the Z1 side is joined to the end portion 22b of the bus bar member 22a disposed on the Z1 side of the stator core 10. In addition, the end portion 21b of the slot accommodated part 21 on the Z2 side is joined to the end portion 22b of the bus bar member 22a disposed on the Z2 side of the stator core 10. The end portions 21a and 21b of the slot accommodated part 21 in the longitudinal direction and the end portions 22b of the bus bar members 22a are joined by, for example, welding, solid phase joining, or the like. As a result, since the slot accommodated part 21 are exposed from the coil module 30, the end portions 21a and 21b of the slot accommodated part 21 in the longitudinal direction (Z direction) and the end portions 22b of the plate-shaped bus bar members 22a can be easily joined.

### (Coil end portion insulating step)

Next, as illustrated in FIG. 6, in step S6, a coil end portion insulating step is performed. The coil end portion insulating step (S6) is a step of performing an insulation process on the coil end portions 22 that are disposed outside the slots 13 as a part of the coil part 20. Specifically, after the end portions 21a and 21b of the slot accommodated parts 21 in the Z direction and the end portions 22b of the bus bar members 22a are joined, insulation processing is performed by resin immersion, resin molding, or the like on the joined portions between (i) the end portions 21a and 21b of the slot accommodated parts 21 in the Z direction and (ii) the end portions 22b of the bus bar members 22a and between the plurality of bus bar members 22a.

### [Modifications]

It should be understood that the embodiment disclosed herein is illustrative in all respects and is not restrictive. The scope of the present invention is defined not by the description of the above embodiment but by the claims, and further includes meanings equivalent to the claims and all changes (modifications) within the scope.

For example, in the above embodiment, the coil module 30 is fixed to the stator core 10 by heating and melting, and cooling and solidifying at least a part of the thermoplastic resin member 40 in the coil module 30 after the coil module 30 is inserted into the slot 13, but the present invention is not limited thereto. In the present invention, the following configuration may be employed. The resin member in the coil module contains a foaming agent, and the foaming agent is foamed after the coil module is inserted into the slot, whereby the coil module is fixed to the stator core.

Furthermore, the above embodiment described an example in which the coil module 30 is formed such that the plurality of slot accommodated parts 21 are integrally molded with the thermoplastic resin member 40, but the present invention is not limited thereto. In the present invention, a coil module may be formed in which a plurality of slot accommodated parts are integrally molded with a thermosetting resin member such as an epoxy resin or an acrylic resin.

In addition, the above embodiment described an example in which the coil module 30 is inserted into the slot 13 while the insertion-time contact projections 44 formed in the coil module 30 are kept in contact with the slot 13, but the present invention is not limited thereto. In the present invention, the following configuration may be employed. The insertion-time contact projections are not provided on the coil module, and the coil module is inserted into the slot while keeping a relatively large surface of the coil module in contact with the slot. In that case, in order to reduce a load resistance generated in the coil module (resin member) when the coil module is inserted into the slot, it is preferable to make the outer diameter dimension of the coil module smaller than in the case where the coil module is provided with an insertion-time contact projection.

Furthermore, the above embodiment has described an example in which the coil module 30 is formed that includes: the first positioning projections 43a formed, as the positioning parts 43, at the end portions 40a on one side of the coil module 30 in the longitudinal direction (Z direction); and the second positioning projections 43b, elastically deformably formed, as the positioning parts 43, at the end portion 40b on the other side of the coil module 30 in the longitudinal direction, and the coil module 30 is inserted into the slot 13. However, the present invention is not limited to this configuration. In the present invention, the following configuration may be employed. A coil module is formed that includes a first positioning projection formed, as a positioning part, at an end portion on one side of the coil module in the longitudinal direction and that does not include a second positioning projection elastically deformably formed, as a positioning portion, at an end portion on the other side of the coil module in the longitudinal direction, and the coil module is inserted into the slot.

Furthermore, the above embodiment has described an example in which the coil module 30 is formed that includes the positioning parts 43 for positioning, in the axial direction (Z direction) of the stator core 10, the coil module 30 with respect to the slot 13, and the coil module 30 is inserted into the slot 13. However, the present invention is not limited thereto. In the present invention, the following configuration may be employed. A coil module is formed that does not include a positioning part for positioning, in the axial direction of the stator core, with respect to the slot, and the coil module is inserted into the slot.

Furthermore, the above embodiment has described an example in which the insertion-time contact projections 44 have a semicircular shape as viewed in the Z direction (axial direction). However, the present invention is not limited thereto. In the present invention, the insertion-time contact projections may be configure to have a shape other than a semicircular shape as viewed in the axial direction.

Furthermore, the above embodiment has described an example in which the plurality of (two) insertion-time contact projections 44 are formed on each of both side surfaces of the coil module 30 in the C direction (circumferential direction). However, the present invention is not limited thereto. In the present invention, the insertion-time contact projection may be formed only on the side surface on one side in the circumferential direction of the coil module. Alternatively, one insertion-time contact projection may be formed on each of both side surfaces of the coil module in the circumferential direction. Alternatively, the number of the insertion-time contact projections may be different between the side surface on one side and the side surface on the other side in the circumferential direction of the coil module. Alternatively, the insertion-time contact projection may be formed on the radially outer side surface of the coil module.

### REFERENCE SIGNS LIST

10: Stator core, 13: Slot, 20: Coil part, 21: Slot accommodated part, 21a, 21b: End portion (of slot accommodated part in longitudinal direction), 22: Coil end portion, 22a: Bus bar member, 22b: End portion (of bus bar member), 30: Coil module, 40c: Side surface (of coil module), 40: Resin member, 43: Positioning part, 44: Insertion-time contact projection, 100: Stator, W1: Thickness of resin member (between slot accommodated parts), and W2: Thickness of resin member (around a plurality of slot accommodated parts)

## Claims

1. A method for manufacturing a stator, the method comprising:
a module forming step of forming a coil module in which a plurality of slot accommodated parts are integrally molded with an insulating resin member by filling a space between the plurality of slot accommodated parts with the resin member and covering a periphery of the plurality of slot accommodated parts with the resin member in a state where the plurality of slot accommodated parts on which coating films are not formed and that are to be disposed, as a part of a coil part, in a slot of a stator core are arranged such that the plurality of slot accommodated parts are allowed to be disposed in the slot; and
a module inserting step of inserting the coil module into the slot after the module forming step.

2. The method according to claim 1, wherein the module forming step is a step of forming the coil module such that a thickness of the resin member around the plurality of slot accommodated parts is larger than a thickness of the resin member between the plurality of slot accommodated parts.

3. The method according to claim 1, wherein the module forming step is a step of forming the coil module including a positioning part that is made of the resin member and positions the coil module, in an axial direction of the stator core, with respect to the slot, and
the module inserting step is a step of inserting the coil module into the slot such that the coil module is disposed, by the positioning part, at a predetermined position with respect to the slot in the axial direction.

4. The method according to claim 1, wherein the module forming step is a step of forming the coil module including an insertion-time contact projection that is made of the resin member, is formed on a side surface of the coil module to extend in a longitudinal direction of the coil module, protrudes from the side surface, and is brought into contact with the slot in the module inserting step, and
the module inserting step is a step of inserting the coil module into the slot while keeping the insertion-time contact projection in contact with the slot.

5. The method according to claim 1, further comprising:
a bus bar j oining step of j oining, after the module inserting step, (i) an end portion, of the slot accommodated part, in a longitudinal direction, wherein the end portion is disposed outside the slot and is exposed from the coil module and (ii) an end portion of a bus bar member having a plate shape, wherein the bus bar member is configured to connect, outside the slot, end portions, of the slot accommodated parts disposed in the slots that are mutually different from each other, in a longitudinal direction of the slot accommodated parts, and
a coil end portion insulating step of performing, after the bus bar joining step, an insulation process on a coil end portion disposed, as a part of the coil part, outside the slot.
